# DEMANDE DE BREVET EUROPEEN

(11) **EP 4 432 269 A1**
(43) Date de publication de la demande: **18.09.2024**
(21) Numéro de dépôt: 24162697.7
(22) Date de dépôt: 11.03.2024
(51) Int. Cl.: G09F 3/20, B60K 35/00, G09F 9/37, G09F 21/04, B60J 10/265, B60J 10/75

(54) **MODULE DE VITRE EN PARTICULIER POUR UN VEHICULE**

(30) Priorité: 14.03.2023 FR 2302372
(71) Demandeur: HUTCHINSON, 75008 Paris (FR)
(72) Inventeur: BOURGEOIS, Etienne, 75008 Paris (FR); BAYLON, Jules Arthur, 35830 Betton (FR); BLOTTIAU, Olivier, 45200 Amilly (FR); BLANCHARD GOMES, David, 75008 Paris (FR)
(74) Mandataire: Gevers & Orès

(57) **Abrégé**

Module de vitre (30), en particulier pour un véhicule, ce module (30) comportant :
- une paroi en verre (32) comportant deux faces opposées, respectivement interne (32a) et externe (32b), et
- une sérigraphie (34) qui recouvre au moins une partie d'au moins une des faces (32a, 32b) de la paroi (32),

caractérisé en ce qu'il comprend en outre un écran (40) d'affichage d'information du type non-émissif, cet écran (40) étant fixé à la paroi en verre (32) et comportant une zone d'affichage (40a) configurée pour être visualisée par une personne à travers la paroi en verre (32),
et en ce que la sérigraphie (34) recouvre tout le pourtour de l'écran (40) et comprend au moins une fenêtre (36) qui est située au niveau de ladite zone d'affichage (40a) afin de permettre sa visualisation par la personne à travers la paroi en verre (32) et la ou chaque fenêtre (36).

## Description

### Domaine technique de l'invention

La présente invention concerne un module de vitre, en particulier pour un véhicule, ce module de vitre comportant un écran d'affichage d'information.

### Arrière-plan technique

L'état de la technique comprend notamment les documents FR-A1-3 087 726, GB-A-2 568 933 et US-A1-2020/310215.

Dans la présente demande, on désigne par module de vitre, un module comportant :
- une paroi en verre comportant deux faces opposées, respectivement interne et externe, et
- une sérigraphie qui recouvre au moins une partie d'au moins une des faces de la paroi.

La paroi en verre comprend une face interne destinée à être orientée vers l'intérieur du véhicule et donc de son habitacle, et une face externe destinée à être orientée vers l'extérieur de l'habitacle.

La sérigraphie recouvre tout ou partie de la face interne et/ou externe et a pour but d'améliorer l'esthétique du module. La sérigraphie est en général un revêtement qui est apposé sur la paroi en verre et peut s'étendre par exemple sur tout le pourtour de cette paroi.

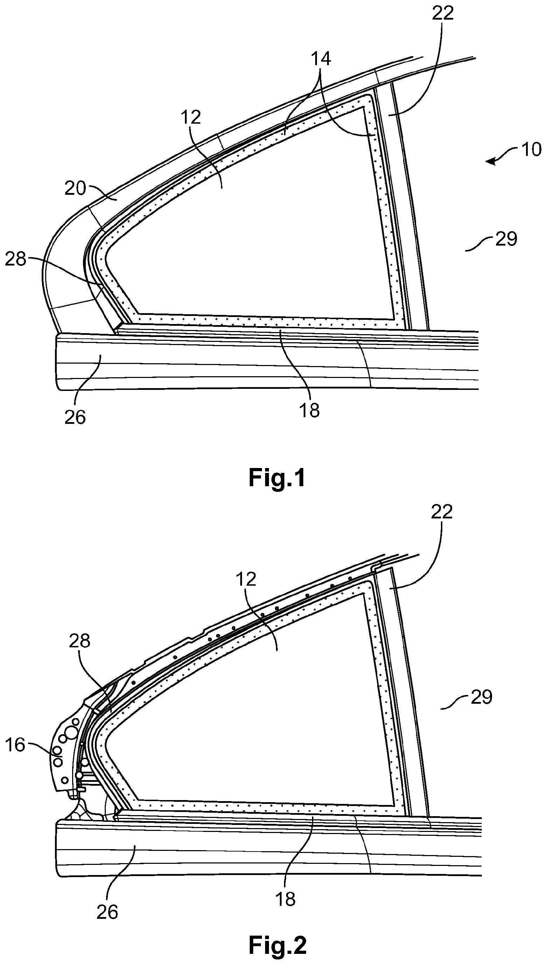

Un véhicule comprend en général plusieurs modules de ce type. Les figures 1 à 6 montrent un module de vitre fixe arrière, c'est-à-dire un module dont la paroi en verre 12 est fixe et qui est situé à l'arrière du véhicule. Ce type de module peut être solidaire du bâti du véhicule ou faire partie d'une porte du véhicule.

Dans l'exemple représenté, la sérigraphie 14 est visible aux figures 1 à 3 et s'étend le long des bords périphériques de la paroi en verre 12. Le module de vitre 10 comprend, en plus de la paroi en verre 12 et de la sérigraphie 14 sur cette paroi en verre :
- un châssis 16 de support et de fixation de la paroi en verre 12,
- des éléments de capotage ou d'habillage, tels qu'un lécheur 18 qui a une forme allongée et s'étend le long d'un bord inférieur de la paroi en verre 12, et des enjoliveurs 20, 22,
- un élément 24 d'isolation acoustique,
- une tôle 26 située sous la paroi en verre 12, et
- un surmoulage 28 sur la paroi en verre 12, qui s'étend sur tout ou partie des bords périphériques de cette paroi, etc.

Les figures 1 à 6 montrent le module de vitre 10 depuis l'extérieur du véhicule. Le module de vitre 10 peut comprendre d'autres éléments, du côté intérieur du véhicule. Tous ces éléments extérieurs et intérieurs sont toutefois facultatifs.

Les figures 1 à 6 montrent également une vitre avant 29 qui est ici une vitre mobile.

On a déjà proposé d'associer un écran d'affichage d'information à une pièce d'un véhicule. Cependant, les solutions proposées ne sont pas toujours satisfaisantes, en particulier car elles ne sont pas toujours esthétiques. En effet, un écran d'affichage n'est pas particulièrement esthétique et peut altérer l'esthétisme global du véhicule. Par ailleurs, pour être lisible ou visible, les informations affichées sur l'écran doivent être assez grandes, ce qui oblige à augmenter la taille de l'écran au détriment de l'esthétisme du véhicule.

De plus, afin d'éviter ou de limiter la pollution lumineuse émise par un véhicule et aussi de limiter le risque de perturbation des conducteurs des autres véhicules, il est préférable d'éviter ou de limiter les points lumineux visibles sur le véhicule en dehors de ceux dédiés aux feux d'éclairage et de position du véhicule. Cette limitation de pollution lumineuse émise par le véhicule fait notamment l'objet d'une réglementation de la Commission Economique pour l'Europe des Nations Unies (CEE-ONU), à savoir le Règlement n°48.

Par ailleurs, un module de vitre et en particulier sa paroi en verre peut comprendre une partie qui n'est pas recouverte par la sérigraphie et qui reste donc transparente ou translucide de façon à ce qu'une personne puisse voir l'intérieur de l'habitacle du véhicule à travers la paroi en verre, depuis l'extérieur du véhicule, ou voir l'extérieur du véhicule à travers la paroi en verre, depuis l'intérieur de l'habitacle du véhicule. Cependant, la présence d'un écran d'affichage sur le module de vitre peut gêner ou encombrer cette vision et altérer l'esthétisme du module de vitre.

La présente invention propose une solution d'intégration d'un écran d'affichage à un module de vitre, qui soit simple, efficace, économique et esthétique, et qui tienne compte des exigences ou de la réglementation précitée(s).

### Résumé de l'invention

L'invention concerne un module de vitre, en particulier pour un véhicule, ce module comportant :
- une paroi en verre comportant deux faces opposées, respectivement interne et externe, et un bord périphérique s'étendant tout autour de la paroi en verre, la paroi en verre étant transparente ou translucide,
- une sérigraphie qui recouvre et opacifie au moins une partie d'au moins une des faces de la paroi en verre, de façon à ce que le reste de la paroi en verre reste transparente ou translucide, et
- un surmoulage sur la paroi en verre, ce surmoulage recouvrant au moins une partie dudit bord périphérique,

caractérisé en ce qu'il comprend en outre un écran d'affichage d'information du type non-émissif et sans rétro-éclairage, cet écran étant fixé à la paroi en verre et comportant une zone d'affichage configurée pour être visualisée par une personne à travers la paroi en verre,
et en ce que la sérigraphie comprend au moins une fenêtre qui est située au niveau de ladite zone d'affichage afin de permettre sa visualisation par la personne à travers la paroi en verre et la ou chaque fenêtre, et en ce que la sérigraphie, voire également une partie dudit surmoulage, recouvre(nt) tout le pourtour de l'écran.

L'invention propose ainsi de fixer un écran d'affichage d'information sur la paroi en verre de façon à ce qu'une personne puisse visualiser les informations affichées sur l'écran à travers la paroi en verre, en particulier depuis l'extérieur du véhicule ou du module de vitre, mais aussi voir à travers la partie non sérigraphiée de la paroi en verre.

La particularité de cet écran est qu'il est non émissif. Dans la présente demande, on entend par écran non émissif, un écran qui n'émet pas de lumière en particulier vers l'extérieur, que ce soit pendant l'affichage d'information ou en l'absence d'affichage d'information. Cet écran est en outre sans rétro-éclairage, ce qui exclut généralement les technologies du type LED et TFT par exemple qui en plus d'être du type avec rétro-éclairage émettent également de la lumière vers l'extérieur. Les écrans OLED émettent également de la lumière vers l'extérieur et ne sont donc pas des écran au sens de l'invention. C'est également le cas des écrans LCD.

Des exemples d'écran non émissif et sans rétro-éclairage sont ; les E-paper (aussi appelés papiers électroniques), les écrans à électromouillage, les écrans « Mirasol », les écrans dut type Pixel Qi, etc.

Dans la présente demande, on entend par « information », tout élément visible ou lisible choisi par exemple parmi : un ou des logos, une ou des écritures, un ou des schémas ou dessins, etc.

L'information peut être une information du véhicule ou d'un équipement du véhicule, tel que par exemple : un niveau de charges de batteries électriques, une direction GPS, une identification, un clavier ou pavé numérique, un QR code, une température intérieure du véhicule ou extérieure du véhicule, etc. L'information peut par exemple provenir de données issues du réseau CAN/LIN/Ethernet du véhicule (*Control Area Network*/*Local Interconnect Network*/*Ethernet).*

Une autre particularité de l'invention est que le pourtour de l'écran est recouvert par la sérigraphie, voire également par une partie du surmoulage. La sérigraphie peut donc cacher tout le contour de l'écran. En variante, la sérigraphie recouvre une partie du contour de l'écran et le reste de ce contour est recouvert par le surmoulage. Dans les deux cas de figure, l'intégralité du contour de l'écran est recouverte et donc cachée, ce qui améliore l'esthétique du module dans la mesure où seule la zone d'affichage peut être rendue visible, c'est-à-dire seule la zone utile de l'écran peut être rendue visible. Le reste non utile de l'écran est ainsi caché par la sérigraphie (voir aussi le surmoulage).

La zone d'affichage de l'écran est visible à travers au moins une fenêtre de la sérigraphie. Dans la présente demande, on entend par fenêtre de la sérigraphie une étendue non sérigraphiée à l'intérieur d'une étendue sérigraphiée, c'est-à-dire que la fenêtre ou l'étendue non sérigraphiée est entièrement entourée par l'étendue sérigraphiée.

La configuration selon l'invention améliore significativement l'esthétisme d'un module de vitre équipé d'un écran d'affichage.

Le module de vitre selon l'invention peut comprendre une ou plusieurs des caractéristiques suivantes, prises isolément les unes des autres ou en combinaison les unes avec les autres :
- l'écran est du type papier électronique ou E-paper ;
- l'écran est apte à adopter deux états comportant un premier état dans lequel la zone d'affichage émet ou a une couleur et/ou un motif reproduisant la couleur et/ou le motif de la sérigraphie de façon à ce qu'une personne ne puisse pas distinguer cette zone d'affichage à travers la paroi en verre, et un second état dans lequel la zone d'affichage émet au moins une information de façon à ce qu'un utilisateur puisse voir cette information à travers la paroi en verre et la ou chaque fenêtre ; en variante, l'écran pourrait adopter un ou plusieurs autres états et par exemple un état additionnel dans lequel il a ou émet une couleur ou un motif encore différent, par exemple une couleur différente des couleurs des deux premiers états ;
- la sérigraphie est de couleur noire et, dans ledit premier état, la zone d'affichage est de couleur noire ; en variante, la sérigraphie pourrait avoir une autre couleur quelconque ;
- la sérigraphie comprend deux ou plus fenêtres qui sont situées au niveau de ladite zone d'affichage afin de permettre sa visualisation par la personne à travers chacune de ces fenêtres ;
   -- la zone d'affichage a une aire supérieure ou égale à 4cm² et la sérigraphie a une aire supérieure ou égale à 10cm² ;
   -- la sérigraphie est située au niveau d'un coin ou d'une extrémité de la paroi en verre ;
- la paroi en verre comprend une unique couche de verre et l'écran est fixé sur la face interne de la paroi en verre et donc de cette couche de verre ;
- la paroi en verre comprend deux couches de verre et l'écran est fixé sur la face interne de la paroi en verre (ou de la couche interne) ou intercalé entre ces ou des couches de verre ;
   -- la paroi en verre est du type trempé ou feuilleté ; une paroi en verre trempée comprend en général une seule couche de verre ; une paroi en verre feuilletée comprend en général deux couches de verre entre lesquelles est prise en sandwich un film adhésif ;
- le surmoulage recouvre une partie ou la totalité de l'écran ;
   -- le surmoulage est dans un matériau choisi parmi TPE, TPO, TPV, TPS, PA et PP ;
- l'écran est relié à un circuit électronique de gestion de l'affichage, ce circuit étant adjacent à l'écran ou déporté de l'écran voire également de la paroi en verre ;
- le module comprend en outre un châssis métallique de support de la paroi en verre ;
- le circuit est situé dans un boîtier fixé sur le châssis ;
- le circuit est relié à l'écran par une nappe de fils conducteurs ;
- du côté de la face interne de la paroi en verre, l'écran est recouvert d'un capotage ou d'une coque ;
   -- l'écran est fixé à la paroi en verre par un film adhésif transparent recouvrant ladite zone d'affichage ;
- l'écran est tactile et est apte à être utilisé par une personne pour saisir des informations ou faire des requêtes, à travers la paroi en verre ;
   -- la sérigraphie est un revêtement par exemple du type peinture, céramique, etc. ;
   -- le revêtement de la sérigraphie est continu ou discontinu (sous forme de points ou autres formes), ou peut comprendre une partie continue et une partie discontinue (sous forme de points ou autres formes) ;
   -- l'écran est flexible ou rigide ;
   -- l'écran est non transparent ou non translucide ;
   -- l'écran est du type à affichage fixe ou semi-permanent, c'est-à-dire que l'écran est configuré pour maintenir l'affichage d'une information même sans alimentation ou commande électrique, une alimentation ou commande électrique étant nécessaire pour modifier cet affichage ou l'information affichée ;
   -- le module de vitre comprend une partie transparente ou translucide, en particulier à travers laquelle la personne peut voir l'intérieur de l'habitacle du véhicule ;
   -- la ou chaque fenêtre a une forme configurée pour constituer à elle seule une information ; un changement d'état et par exemple de couleur de l'écran d'affichage permet alors de faire apparaître l'information formée par la ou chaque fenêtre ;
   -- l'écran est configuré pour ne pas nécessiter un apport ou une alimentation en énergie lorsqu'il est dans un état stable d'affichage d'information, quelle qu'elle soit ;
   -- l'écran n'est pas du type LCD, LED et TFT ;
   -- le module comprend un ou plusieurs écrans et une ou plusieurs fenêtres ;
   -- chaque fenêtre est associée à un écran ou plusieurs écrans, et chaque écran peut être associé à une fenêtre ou plusieurs fenêtres.

La présente invention concerne également un véhicule, ou porte de véhicule, comportant un module tel que décrit ci-dessus.

Avantageusement, le véhicule comprend au moteur électrique pour la propulsion du véhicule, et des batteries électriques reliées au moteur électrique, l'écran ou son circuit étant relié à un dispositif de gestion des batteries et étant configuré pour afficher un état de charge de ces batteries.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique d'un module de vitre pour un véhicule, les figures 2 à 4 représentant le module de vitre de la figure 1 sans certains éléments ;
[Fig.2] la figure 2 est une vue schématique du module de vitre de la figure 1, sans certains éléments de ce module ;
[Fig.3] la figure 3 est une vue schématique du module de vitre de la figure 1, sans certains éléments de ce module;
[Fig.4] la figure 4 est une vue schématique du module de vitre de la figure 1, sans certains éléments de ce module;
[Fig.5] la figure 5 est une vue schématique du module de vitre de la figure 1, sans certains éléments de ce module;
[Fig.6] la figure 6 est une vue schématique du module de vitre de la figure 1, sans certains éléments de ce module ;
[Fig.7] la figure 7 est une vue schématique d'un module de vitre selon un mode de réalisation de l'invention ;
[Fig.8] la figure 8 est une vue schématique en perspective du module de vitre de la figure 7, des informations étant affichées par l'écran du module ; [Fig.9] la figure 9 est une vue schématique en coupe d'un module de vitre ;
[Fig.10] la figure 10 est une vue schématique d'un écran et d'un circuit de gestion de l'affichage sur l'écran, reliés ensemble par une nappe de fils conducteurs ;
[Fig.11] la figure 11 sont des vues schématiques en coupe selon les lignes A-A et B-B de la figure 7 ;
[Fig.12] la figure 12 est une vue schématique en coupe selon la ligne A-A de la figure 7, et illustre une variante de la figure 11 ;
[Fig.13] la figure 13 est une vue schématique d'un écran du type E-paper et d'un circuit de gestion des informations affichées sur cet écran ;
[Fig.14] la figure 14 est une vue schématique en coupe d'une paroi en verre et d'un écran du type E-paper ;
[Fig.15] la figure 15 est un schéma illustrant le fonctionnement d'un écran du type E-paper ;
[Fig.16] la figure 16 est une vue similaire à celle de la figure 7 et montre une variante de réalisation du module de vitre ;
[Fig.17] la figure 17 est une vue similaire à celle de la figure 7 et montre une autre variante de réalisation du module de vitre ; et
[Fig.18] la figure 18 est une vue similaire à celle de la figure 7 et montre une variante de réalisation du module de vitre.

### Description détaillée de l'invention

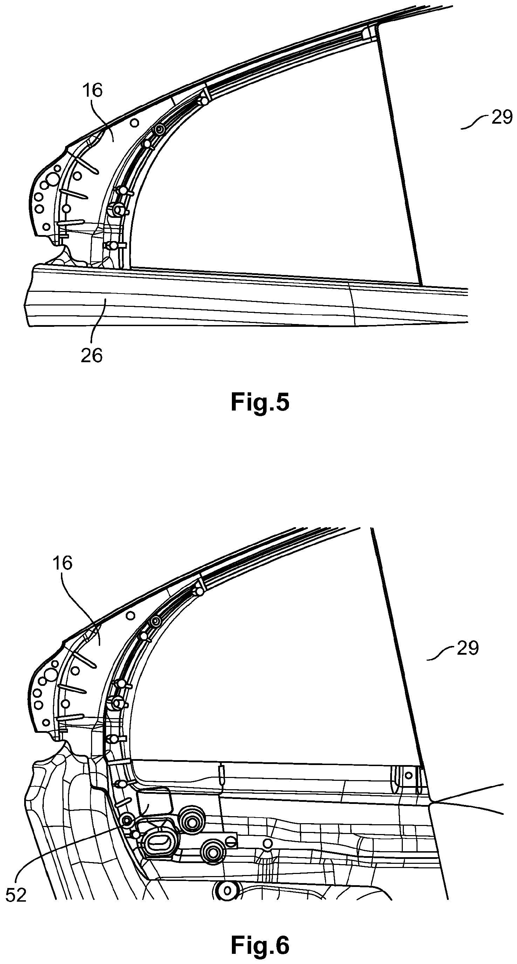

La figures 1 à 6 ont été brièvement décrites dans ce qui précède. Pour plus de précision, en partant de la figure 1 et en allant jusqu'à la figure 6, des éléments ont été retirés du module de vitre 10 pour mieux apprécier ses différents composants.

Ainsi, la figure 1 illustre un exemple de module de vitre 10 dans son ensemble et montre ce module de vitre 10 depuis l'extérieur d'un véhicule ou montre du moins la face extérieure de ce module de vitre 10.

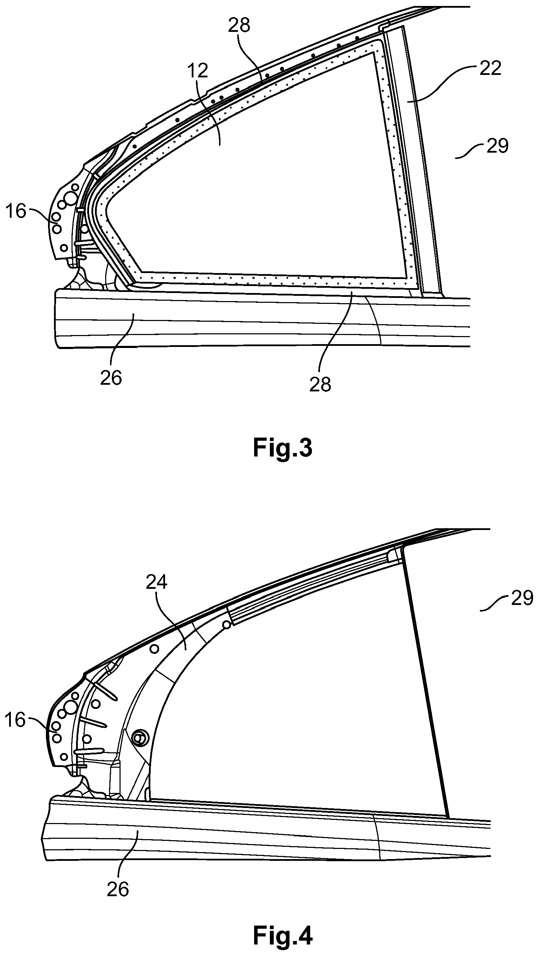

La figure 2 illustre le module de vitre 10 sans son enjoliveur supérieur 20, la figure 3 illustre le module de vitre 10 sans son lécheur 18 (et sans l'enjoliveur 20), la figure 4 illustre le module de vitre 10 sans sa paroi en verre 12 ainsi que le surmoulage 28 et la sérigraphie 14 associés (et sans l'enjoliveur 20 et le lécheur 18), la figure 5 illustre le module de vitre 10 sans son élément d'isolation acoustique 24 (et sans l'enjoliveur 20, le lécheur 18 et la paroi en verre 12), et la figure 6 illustre le module de vitre 10 sans sa tôle inférieure 26 (et sans l'enjoliveur 20, le lécheur 18, la paroi en verre 12 et l'élément 24). Le module de vitre 10 peut comprendre d'autres éléments du côté de sa face intérieure.

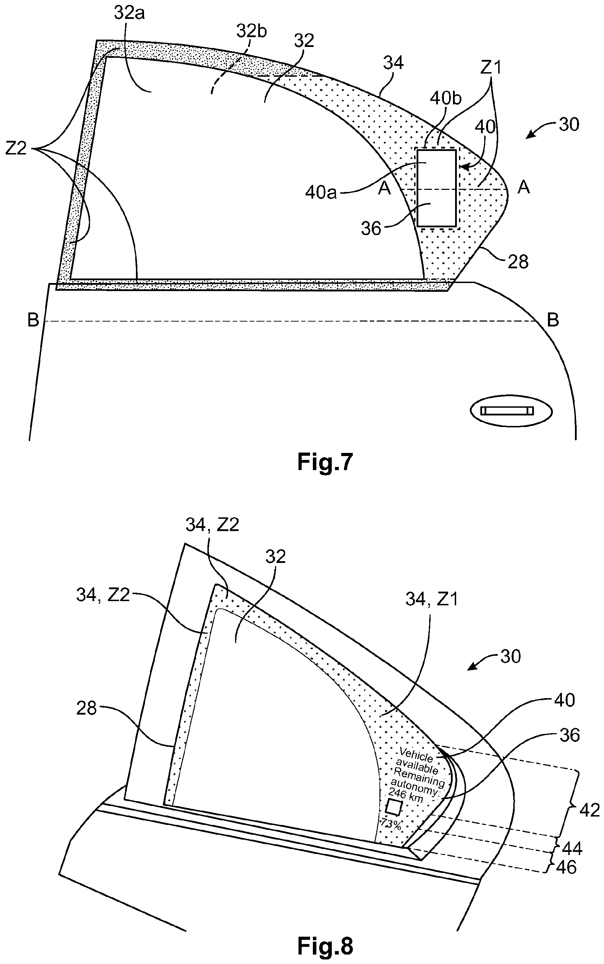

On se réfère désormais à la figure 7 qui illustre un exemple schématique de réalisation d'un module de vitre 30 selon l'invention.

Le module de vitre 30 peut comprendre tout ou partie des éléments décrits dans ce qui précède, en relation avec les figures 1 à 6.

Le module de vitre 30 comprend au moins :
- une paroi en verre 32 comportant deux faces opposées, respectivement interne 32a et externe 32b,
- une sérigraphie 34 qui recouvre et opacifie une partie d'au moins une des faces 32a ,32b de la paroi en verre 32, et
- un surmoulage 28 sur la paroi en verre 32, qui recouvre au moins une partie du bord périphérique de la paroi en verre 32.

On comprend donc que la sérigraphie 34 peut être située sur la face interne 32a destinée à être orientée à l'intérieur du véhicule, sur la face externe 32b destinée à être orientée vers l'extérieur du véhicule, voire sur les deux faces 32a, 32b.

La sérigraphie 34 ne s'étend pas sur toute l'étendue de la paroi en verre 32, le module de vitre 30 conservant une partie, par exemple centrale, transparente ou translucide, à travers laquelle une personne peut voir l'intérieur de l'habitacle du véhicule, depuis l'extérieur du véhicule, ou inversement peut voir l'extérieur du véhicule depuis l'intérieur de l'habitable du véhicule.

Dans l'exemple représenté, le module de vitre 30 comprend des éléments similaires à ceux décrits dans ce qui précède en relation avec les figures 1 à 6, et fait partie d'une porte de véhicule même si cet aspect n'est pas limitatif.

La sérigraphie 34 s'étend ici au niveau d'un coin ou d'une extrémité de la paroi en verre 32, sur une surface ou zone Z1. Cette zone Z1 a par exemple une aire supérieure ou égale à 10cm².

La sérigraphie 34 s'étend en outre sur une zone Z2 située surtout le pourtour de la vitre 32.

À l'intérieur de la zone Z1, la sérigraphie 34 comprend au moins une fenêtre 36. La fenêtre 36 est une étendue non sérigraphiée à l'intérieur d'une étendue sérigraphiée. Dans le cas où la sérigraphie 34 est formée par un revêtement, du type peinture ou céramique par exemple, apposé sur la paroi en verre 32, on comprend que le revêtement est présent sur l'étendue sérigraphiée et pas sur l'étendue non sérigraphiée. La fenêtre 36 est ainsi située à l'intérieur de la zone Z1.

La fenêtre 36 peut avoir n'importe quelle forme, choisie par exemple parmi : un rectangle, un carré, un polygone, un rond, une ellipse, un losange, un trapèze, un triangle, etc.

Dans l'exemple représenté, la fenêtre 36 a une forme générale rectangulaire. La fenêtre 36 peut avoir une aire supérieure ou égale à 4cm².

Le module de vitre 30 comprend en outre un écran 40 d'affichage d'information du type non-émissif et sans rétro-éclairage, c'est-à-dire notamment qui n'émet pas de lumière.

Cet écran 40 est fixé à la paroi en verre 32.

La paroi en verre 32 peut comprendre une unique couche de verre. L'écran est alors de préférence fixé sur la face interne 32b de la paroi en verre 32 et donc de cette couche de verre.

En variante, la paroi en verre 32 peut comprendre deux ou plus couches de verre. L'écran 40 est alors intercalé entre ces ou des couches de verre. En variante, il pourrait être fixé sur la face interne 32b de la paroi en verre 32. L'écran 40 comporte une zone d'affichage 40a configurée pour être visualisée par une personne à travers la paroi en verre 30 et à travers la fenêtre 36.

Le pourtour 40b de l'écran 40 est recouvert par la sérigraphie 34 ce qui permet de le cacher. La fenêtre 36 est située au niveau de la zone d'affichage 42 de l'écran 40. La zone d'affichage 40a de l'écran est ainsi visible à travers la fenêtre 36 de la sérigraphie 34 par une personne, telle que le propriétaire ou l'utilisateur du véhicule.

La zone d'affichage 40a de l'écran 40 a de préférence une aire supérieure ou égale à 4cm².

Les informations affichées peuvent être de n'importe quelle nature et forme. Elles sont par exemple choisies parmi : un ou des logos, une ou des écritures, un ou des schémas ou dessins, etc.

L'écran 40 peut être tactile et être apte à être utilisé par une personne pour saisir des informations ou faire des requêtes, à travers la paroi en verre 32.

La figure 8 montre un exemple d'affichage d'informations dans un module de vitre 30 selon l'invention. Les informations comprennent une partie supérieure 42 avec du texte, une partie intermédiaire 44 avec un logo ou un schéma, et une partie inférieure avec un chiffre.

Dans l'exemple représenté, les informations sont relatives à un niveau de charge de batteries électriques du véhicule. La partie supérieure 42 indique le nombre de kilomètres restants à parcourir, la partie intermédiaire 44 montre un batterie, et la partie inférieure 46 indique le niveau de charges en pourcentage.

En variante, les informations affichées pourraient par exemple comprendre : une direction GPS, une identification, un clavier ou pavé numérique, un QR code, une température intérieure ou extérieure, etc.

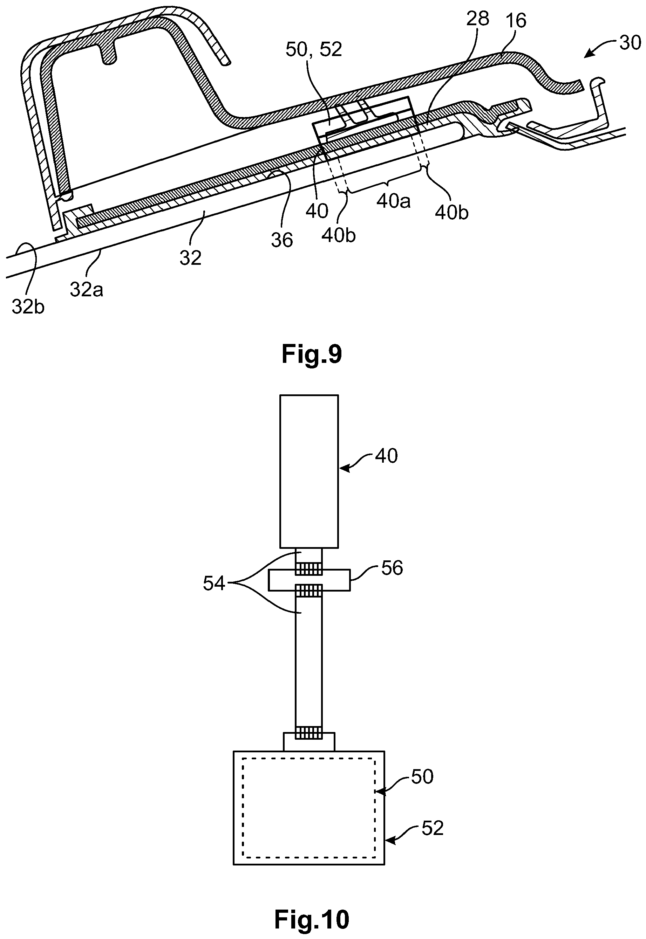

La figure 9 est une vue en coupe d'un module de vitre 30 selon l'invention. On peut constater que l'écran 40 est fixé sur la face interne 32b de la paroi en verre 32. Cette fixation peut être réalisée par un film adhésif transparent par exemple. Ce film est intercalé entre l'écran 40 et la paroi en verre 32 et recouvre entièrement l'écran et en particulier sa zone d'affichage.

Le module de vitre 30 comporte un surmoulage 28 sur la paroi en verre. Ce surmoulage 28 recouvre au moins une partie du bord périphérique de la paroi en verre 32, comme évoqué dans ce qui précède. Le surmoulage 28 est par exemple situé sur la face interne 32b et sur les bords périphériques de la paroi en verre 32. Ce surmoulage 28 est en général réalisé dans un matériau choisi parmi : TPE, TPO, TPV, TPS, PA, PP, etc.

L'écran 40 peut être situé à distance du surmoulage 28. En variante, le surmoulage 28 recouvre l'écran 40 ou au moins une partie de l'écran 40. Le surmoulage 28 peut être utilisé pour fixer l'écran 40 à la paroi en verre 32, à la place ou en sus du film adhésif précité.

La figure 10 illustre un circuit 50 de gestion de l'affichage auquel l'écran 40 peut être relié (en variante, l'écran 40 pourrait être relié à un circuit électronique du véhicule par exemple - par exemple à un calculateur ECU pour *Electronic Control Unit* du véhicule).

Le circuit 50 est de préférence situé dans un boîtier 52 qui permet de protéger le circuit 50 mais aussi de le positionner voire de le fixer sur le véhicule.

Le circuit 50 peut être adjacent à l'écran 40 et par exemple disposé juste derrière ou à côté de l'écran 40 (cf. figure 9). En variante, le circuit 50 est déporté de l'écran 40 voire également de la paroi en verre 32.

A titre d'exemple, le boîtier 52 est fixé sur le châssis 54 du module de vitre 30, qui est visible à la figure 9 et qui peut être similaire à celui des figures 1 à 6. La figure 6 montre par exemple une position possible du boîtier 52 sur le châssis 16, à distance de la paroi en verre 32.

L'écran 40 est de préférence relié au circuit 50 par une nappe 54 de fils conducteurs. La nappe 54 peut être interrompue par des connecteurs 56. Par exemple, l'écran 40 peut être relié à une première nappe qui s'étend depuis l'écran 40 jusqu'à un premier connecteur. Le circuit 50 peut être relié à une seconde nappe qui s'étend depuis le circuit jusqu'à un second connecteur destiné à être enfiché avec le premier connecteur.

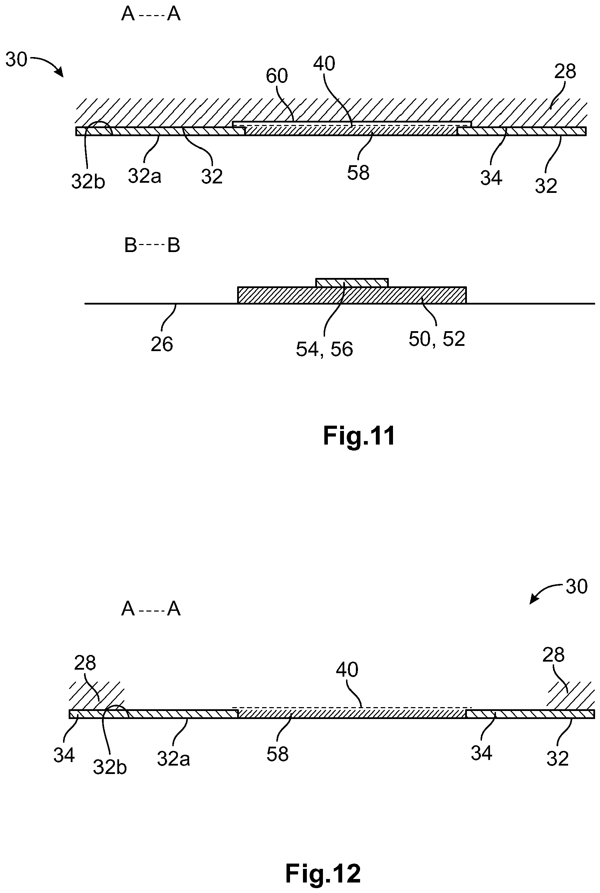

La figure 11 montre des vues en coupe selon les lignes A-A et B-B de la figure 7, respectivement. On constate notamment dans cet exemple que :
- l'écran 40 est fixé à la face arrière 32b de la paroi en verre 32 par un film adhésif 58, comme évoqué dans ce qui précède,
- l'écran 40 peut être protégé par une coque 60 qui le recouvre,
- le surmoulage 28 recouvre également l'écran 40 et en particulier cette coque de protection 60, et
- le circuit 50 est fixé au châssis 16 ou ici à la tôle 26 qui habille ce châssis. Le film 58 est par exemple du type OCA (*Optically Clear Adhesive*)*.*

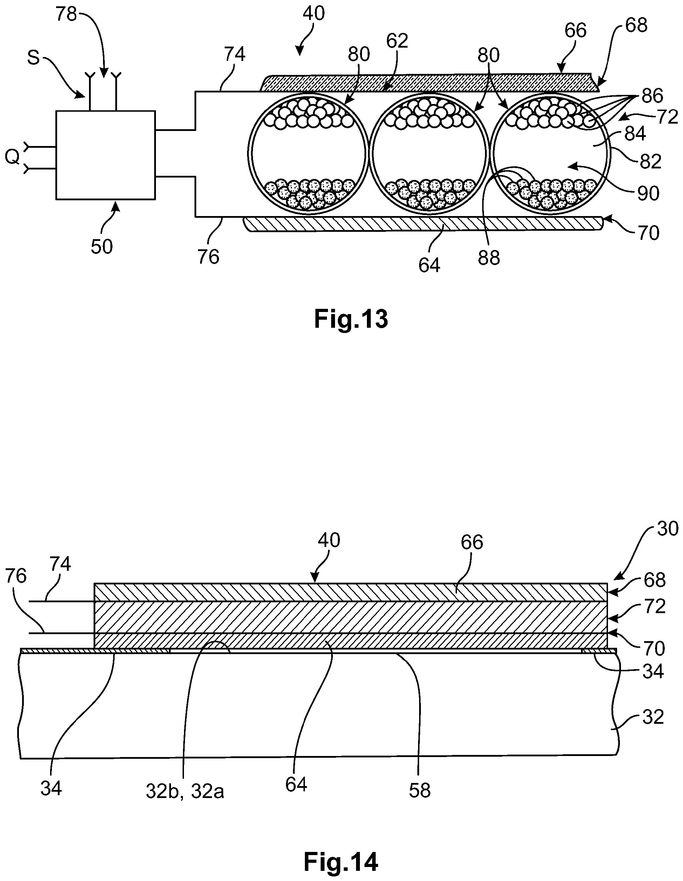

La figure 13 est une vue en coupe selon la ligne A-A d'une variante de réalisation du module 30. On constate ici notamment que :
- l'écran 40 est fixé à la face arrière 32b de la paroi en verre 32 par un film adhésif 58,
- l'écran 40 n'est pas protégé par une coque et n'est pas recouvert par le surmoulage 28 qui est à distance de l'écran 40.

Les figures 13 à 15 illustrent un exemple d'écran 40 qui est particulièrement adapté dans le cadre de la présente invention. Il s'agit d'un écran 40 du type E-paper ou papier électronique.

Un écran 40 de ce type comporte un film d'affichage 62 sur lequel on peut agir électriquement et dont l'apparence peut être influencée. Ce film d'affichage 62 est disposé entre un film transparent ou translucide 64 et une couche de support 66. Ce film d'affichage 62 comporte une première couche d'électrodes transparentes plates 68, une deuxième couche d'électrodes plates 70, et une couche d'affichage 72 disposée entre les deux couches d'électrodes 68, 70.

La première couche d'électrodes 68 est reliée aux circuit 50 via une première connexion 74 électriquement conductrice et la deuxième couche d'électrodes 70 est également reliée au circuit 50 via une deuxième connexion 76 électriquement conductrice.

Le circuit 50 est alimenté en énergie électrique à partir d'une source Q d'énergie électrique qui peut être une batterie du circuit ou une source du véhicule. De plus, le circuit 50 reçoit des signaux de commande S de l'électronique du véhicule ou du module de gestion des batteries du véhicule, via les lignes de commande 78.

La couche d'affichage 72 du film d'affichage 62 comprend un grand nombre de capsules d'affichage 80. Chacune de ces capsules 80 a une paroi transparente 82 et un espace intérieur 84 qui contient une pluralité de premiers pigments 86 d'une première couleur (ici blanc) et une pluralité de deuxièmes pigments 88 d'une deuxième couleur (ici noir) entourés d'un fluide transparent 90. Par exemple, les pigments noir 88 sont chargés positivement et les pigments blancs 86 sont chargés négativement. En variante, les pigments pourraient avoir d'autres couleurs.

L'application d'une tension aux bornes des couches d'électrodes 68, 70 provoque l'activation d'un champ électrique et le déplacement des pigments noirs 88 vers la couche d'électrodes chargée négativement, et des pigments blancs 86 vers la couche d'électrodes chargée positivement, par exemple. La couche d'électrodes 70 est transparente et les pigments qui migrent vers cette couche sont visible par une personne. Chacune des capsules 80 forme un pixel de l'écran 40. On comprend donc que, plus le nombre de capsules 80 est important, et plus le nombre de pixels et donc la définition de l'écran 40 est importante.

Le circuit 50 fournit aux circuits d'électrodes 68, 70 un signal électrique de commutation avec la polarité appropriée pour commuter les capsules 80, par exemple, du blanc au noir ou inversement. Le film transparent ou translucide 64 peut être coloré pour ajuster la couleur visible par la personne.

La figure 14 montre la position et la fixation d'un écran 40 du type E-paper sur la face interne 32b de la paroi en verre d'un module de vitre 30 selon l'invention. L'écran 40 est fixé par un film adhésif 58 comme évoqué dans ce qui précède, qui est intercalé entre le film 64 et la face 32b.

La figure 14 montre également que la sérigraphie 34 peut être utilisée pour cacher les connexions 74, 76, en plus du pourtour de l'écran 40.

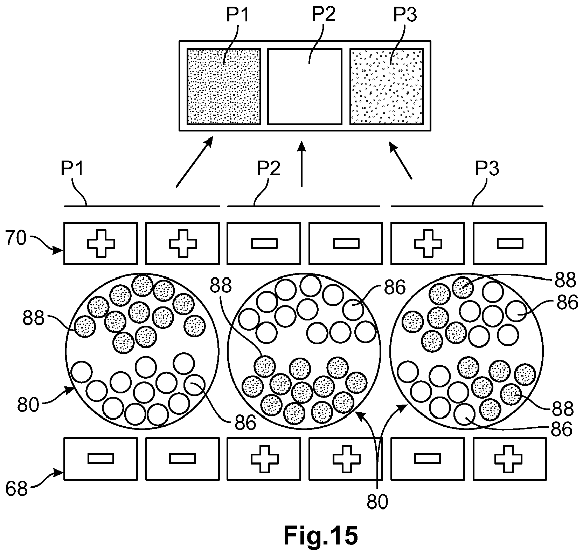

La figure 15 montre trois capsules 80 et les trois pixels P1, P2 et P3 formés par ces capsules 80. On constate que le champ électrique provoque le déplacement des pigments noirs 88 vers la couche d'électrodes 70 qui fait apparaître un pixel P1 noir, le déplacement des pigments blancs 86 vers la couche d'électrodes 70 qui fait apparaitre un pixel P2 blanc, et le déplacement d'une partie des pigments noir 88 et des pigments blanc 86 vers la couche d'électrodes 70 qui fait apparaître un pixel P3 gris.

On comprend donc que chacune des couches d'électrodes 68, 70 est à même d'appliquer une borne positive ou négative, des bornes positives ou des bornes négatives, ou bien un combinaison de borne(s) négative(s) et de borne(s) positive(s) à chacune des capsules 80.

L'avantage d'un écran 40 E-paper est qu'il n'émet pas de lumière. Il n'émet pas de lumière lorsqu'il affiche des pixels blanc, noir, ou autre et il n'émet pas non plus de lumière lorsqu'il déplace les pigments c'est-à-dire lorsqu'il change d'état.

Un autre avantage de l'écran 40 de ce type est qu'il consomme peu d'énergie. Il n'y a pas besoin de l'alimenter en électricité pour maintenir l'affichage des pixels mais seulement pour modifier cet affichage et donc pour déplacer les pigments.

Avantageusement, l'écran 40 est apte à adopter deux états comportant un premier état dans lequel la zone d'affichage 40a émet ou a une couleur et/ou un motif reproduisant la couleur et/ou le motif de la sérigraphie 34 de façon à ce qu'une personne ne puisse pas distinguer cette zone d'affichage 40a à travers la paroi en verre, et un second état dans lequel la zone émet au moins une information de façon à ce qu'un utilisateur puisse voir cette information à travers la paroi en verre 32.

Par exemple, dans le cas où la sérigraphie 34 est de couleur noire, la zone d'affichage 40a est de préférence de couleur noire lorsque l'écran 40 est dans son premier état.

Les couleurs noires de la sérigraphie 34 et de la zone d'affichage 40a sont de préférence les plus proches possibles l'une de l'autre pour que la personne ait du mal à distinguer une différence entre ces couleurs et ait donc du mal à distinguer l'écran 40 à travers la paroi en verre 32.

En variante et par exemple, la sérigraphie 34 pourrait être de couleur blanche et la zone d'affichage 40a pourrait être de couleur blanche lorsque l'écran 40 est dans son premier état. Toute autre couleur est envisageable.

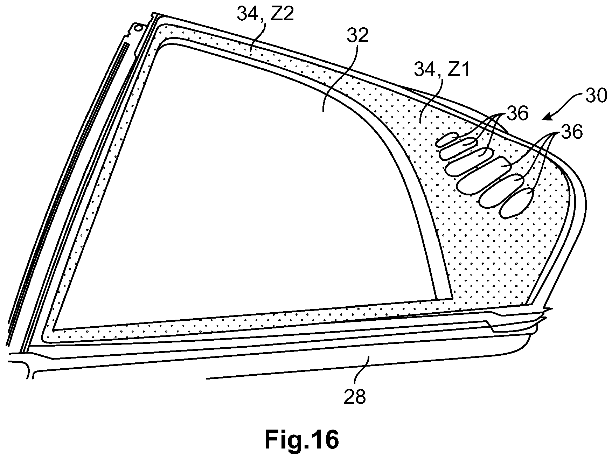

Les figures 16 à 18 montrent des variantes de réalisation du module de vitre 30.

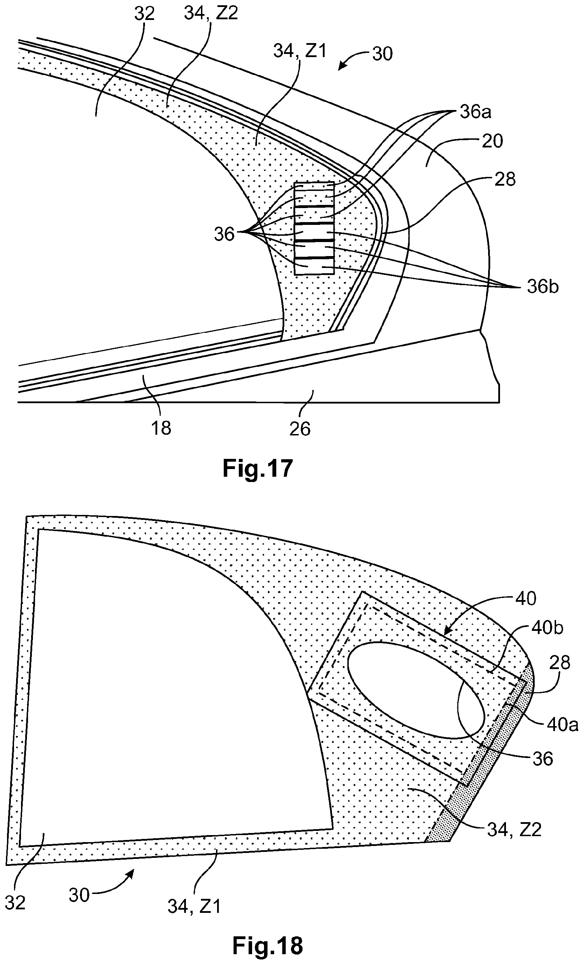

Dans les figures 16 et 17, le module de vitre 30 comprend plusieurs fenêtres 36 adjacentes mais distinctes, à travers lesquelles des informations de l'écran 40 peuvent être visualisées.

Dans la figure 16, les fenêtres 36 sont disposées les unes à côté des autres et ont des formes elliptiques ou oblongues, et des tailles pas forcément identiques. La ou chaque fenêtre peut avoir une forme configurée pour constituer à elle seule une information.

Dans la figure 17, les fenêtres 36 sont disposées les unes au-dessus des autres et ont des tailles et formes (rectangulaires) identiques. Dans cette figure, on constate que des fenêtres supérieures 36a laissent apparaitre un affichage noir, dont la couleur est proche ou identique à la couleur noire de la sérigraphie 34, et des fenêtres inférieures 36b laissent apparaitre un affichage blanc ou clair. La figure 17 pourrait également être considérée comme illustrant une seule fenêtre qui est associée à un écran comportant plusieurs parties rectangulaires disposées les unes au-dessus des autres, avec des parties supérieures qui laissent apparaitre un affichage noir, dont la couleur est proche ou identique à la couleur noire de la sérigraphie 34, et des parties inférieures qui laissent apparaitre un affichage blanc ou clair Dans la figure 18, la forme (globalement ovale) de la fenêtre 36 est différente de la forme (globalement rectangulaire) de l'écran 40 et seule une partie centrale de l'écran 40 est visible à travers la fenêtre 36. Une partie de cet écran 40 est en outre recouverte et donc cachée par une partie du surmoulage 28, en plus de la sérigraphie 34 dans cette endroit ou en l'absence de sérigraphie dans cet endroit.

## Revendications

1. Module de vitre (30), en particulier pour un véhicule, ce module (30) comportant :
- une paroi en verre (32) comportant deux faces opposées, respectivement interne (32a) et externe (32b), et un bord périphérique s'étendant tout autour de la paroi en verre (32), la paroi en verre étant transparente ou translucide,
- une sérigraphie (34) qui recouvre et opacifie une partie d'au moins une des faces (32a, 32b) de la paroi en verre (32), de façon à ce que le reste de la paroi en verre (32) reste transparente ou translucide, et
- un surmoulage (28) sur la paroi en verre (32), ce surmoulage (28) recouvrant au moins une partie dudit bord périphérique,
**caractérisé en ce qu'**il comprend en outre un écran (40) d'affichage d'information du type non-émissif et sans rétro-éclairage, cet écran (40) étant fixé à la paroi en verre (32) et comportant une zone d'affichage (40a) configurée pour être visualisée par une personne à travers la paroi en verre (32),
et **en ce que** la sérigraphie (34) comprend au moins une fenêtre (36) qui est située au niveau de ladite zone d'affichage (40a) afin de permettre sa visualisation par la personne à travers la paroi en verre (32) et la ou chaque fenêtre (36), et **en ce que** la sérigraphie (34), voire également une partie dudit surmoulage (28), recouvre(nt) tout le pourtour de l'écran (40).

2. Module (30) selon la revendication 1, dans lequel l'écran (40) est du type papier électronique ou E-paper.

3. Module (30) selon l'une des revendications précédentes, dans lequel l'écran (40) est apte à adopter deux états comportant un premier état dans lequel la zone d'affichage (40a) émet ou a une couleur et/ou un motif reproduisant la couleur et/ou le motif de la sérigraphie (34) de façon à ce qu'une personne ne puisse pas distinguer cette zone d'affichage (40a) à travers la paroi en verre (32), et un second état dans lequel la zone d'affichage (40a) émet au moins une information de façon à ce qu'un utilisateur puisse voir cette information à travers la paroi en verre (32) et la ou chaque fenêtre (36).

4. Module (30) selon la revendication 3, dans lequel la sérigraphie (34) est de couleur noire et, dans ledit premier état, la zone d'affichage (40a) est de couleur noire.

5. Module (30) selon l'une des revendications précédentes, dans lequel la sérigraphie (34) comprend deux ou plus fenêtres (36) qui sont situées au niveau de ladite zone d'affichage (40a) afin de permettre sa visualisation par la personne à travers chacune de ces fenêtres (36).

6. Module (30) selon l'une des revendications précédentes, dans lequel :
- la paroi en verre (32) comprend une unique couche de verre et l'écran (40a) est fixé sur la face interne (32b) de la paroi en verre (32) et donc de cette couche de verre, ou
- la paroi en verre (32) comprend deux couches de verre et l'écran (40) est fixé sur la face interne (32b) de la paroi en verre (32) ou intercalé entre ces ou des couches de verre.

7. Module (30) selon l'une des revendications précédentes, dans lequel le surmoulage (28) recouvre une partie ou la totalité de l'écran (40).

8. Module (30) selon l'une des revendications précédentes, dans lequel l'écran (40) est relié à un circuit électronique (50) de gestion de l'affichage, ce circuit (50) étant adjacent à l'écran (40) ou déporté de l'écran (40) voire également de la paroi en verre (32).

9. Module (30) selon l'une des revendications précédentes, dans lequel il comprend en outre un châssis métallique (16) de support de la paroi en verre (32).

10. Module (30) selon la revendication 9, en dépendance de la revendication 8, dans lequel le circuit (50) est situé dans un boîtier (52) fixé sur le châssis (16).

11. Module (30) selon l'une des revendications 8 à 10, dans lequel le circuit (50) est relié à l'écran (40) par une nappe (54) de fils conducteurs.

12. Module (30) selon l'une des revendications précédentes, dans lequel, du côté de la face interne (32b) de la paroi en verre (32), l'écran est recouvert d'un capotage ou d'une coque (60).

13. Module (30) selon l'une des revendications précédentes, dans lequel l'écran (40) est tactile et est apte à être utilisé par une personne pour saisir des informations ou faire des requêtes, à travers la paroi en verre (32).

14. Véhicule, ou porte de véhicule, comportant un module (30) selon l'une des revendications précédentes.

15. Véhicule selon la revendication 14, dans lequel il comprend au moteur électrique pour la propulsion du véhicule, et des batteries électriques reliées au moteur électrique, l'écran (40) ou son circuit (50) étant relié à un dispositif de gestion des batteries et étant configuré pour afficher un état de charge de ces batteries.
